Europäisches Patentamt

European Patent Office

Office européen des brevets

(19)

(11) Numéro de publication: **0 332 542**
**A1**

(12) # DEMANDE DE BREVET EUROPEEN

(21) Numéro de dépôt: **89420040.1**

(22) Date de dépôt: **09.02.89**

(51) Int. Cl.⁴: **F 16 H 1/38**
**F 16 H 55/10**

(30) Priorité: **11.02.88 FR 8801830**

(43) Date de publication de la demande:
**13.09.89 Bulletin 89/37**

(84) Etats contractants désignés:
**BE DE ES FR GB IT NL SE**

(71) Demandeur: **Seris, Bruno**
**8 rue René Leynaud**
**F-69001 Lyon (FR)**

(72) Inventeur: **Seris, Bruno**
**8 rue René Leynaud**
**F-69001 Lyon (FR)**

(74) Mandataire: **Laurent, Michel et al**
**Cabinet LAURENT 20, rue Louis Chirpaz B.P. 32**
**F-69131 Ecully Cédex (FR)**

(54) **Dispositif permettant de transmettre la puissance et le couple d'un moteur à deux arbres d'entrainement des roues d'un véhicule.**

(57) Dispositif permettant de transmettre la puissance et le couple d'un moteur à deux demi-arbres (4,5) commandant chacun l'entraînement des roues d'un véhicule.

Il se présente sous la forme d'un différentiel dans lequel :
- les ensembles dits "planétaires" sont constitués de deux spirales (2,3) disposées face à face à l'intérieur du boitier et dont les pas sont inversés, chacune des spirales (2,3) étant reliée mécaniquement à l'extrémité des demi-arbres (4,5) de roues du véhicule pour son entraînement ;
- les satellites sont constitués de quatre roues comportant des dents ou parties en relief (8), montées sur des axes (9) liés au boitier du différentiel, les axes géométriques desdites roues s'étendant dans le plan médian entre les deux faces des deux spirales (2,3), de telle sorte que lesdites roues (8) soient en prise à l'intérieur de chacune desdites spirales (2,3).

Fig.1
Coupe A-A

Bundesdruckerei Berlin

## Description

## DISPOSITIF PERMETTANT DE TRANSMETTRE LA PUISSANCE ET LE COUPLE D'UN MOTEUR A DEUX ARBRES D'ENTRAINEMENT DES ROUES D'UN VEHICULE

La présente invention a trait à un dispositif qui permet de répartir la puissance et le couple d'un moteur entre deux arbres commandant les roues d'un véhicule, automobile par exemple.

Elle a trait plus particulièrement à un nouveau type de différentiel (terme qui sera utilisé dans la suite de la description), qui non seulement permet à chacune des roues motrices d'avoir une vitesse de rotation différente de l'autre, par exemple lors d'un virage, mais également permet de transmettre le couple moteur à chacune des roues quelque soit leur adhérence par rapport au sol.

Les différentiels conventionnels utilisés à ce jour sont des dispositifs bien connus et qui, d'une manière générale, sont constitués par un ensemble comportant un boitier monté sur chacun des arbres reliés aux roues et à la périphérie duquel est prévue une couronne commandée par un pignon relié à l'arbre de transmission du moteur. A l'intérieur du boitier, sont montés deux pignons coniques dits "pignons planétaires" commandant respectivement les arbres entraînant les roues, un ou plusieurs pignons satellites, montés libres sur un arbre solidaire du boitier venant s'engrener avec les pignons planétaires précités. Un tel système fonctionne comme un mécanisme sommateur qui permet d'additionner (ou de soustraire) des rotations, de telle sorte que la puissance du moteur puisse être transmise aux roues motrices tout en leur permettant de tourner à des vitesses différentes l'une de l'autre, notamment dans les virages.

Dans les différentiels proposés à ce jour, le couple est donné à la roue qui a le moins d'adhérance, ce qui peut entraîner un phénomène de patinage lorsque les conditions d'adhérence sont mauvaises. Pour surmonter cet inconvénient, il a été proposé, soit d'imposer aux différentiels un certain pourcentage de frottement pour lui éviter de patiner, mais dans ce cas on rend la direction du véhicule très dure lorsqu'il est monté à l'avant de celui-ci et, de plus, le différentiel s'use comme un embrayage, soit on bloque temporairement ou non le différential, mais alors il n'y a plus d'effet différentiel, les deux roues tournant à la même vitesse, ce qui peut entraîner une perte de maîtrise de la direction du véhicule.

La présente invention vise à surmonter ces inconvénients et concerne un différential qui, non seulement permet d'obtenir une vitesse de rotation différente entre les deux roues si cela est nécessaire, mais également transmet aux roues le couple moteur dont elles ont besoin et ce, en fonction de l'adhérence qu'elles ont par rapport au sol.

Ces problèmes sont résolus, conformément à l'invention, en utilisant comme moyens permettant de transmettre les mouvements des ensembles constitués par un élément en forme de spirale creuse et qui est en prise avec un élément en forme de roue. De tels ensembles de transmission sont connus depuis fort longtemps ainsi que cela ressort notamment du DEB-A-13 560 et de l'US-A-3 608 392, le premier de ces documents décrivant plus particulièrement un dispositif qui est destiné à être associé aux roues jumelées d'un véhicule en vue d'en harmoniser les mouvement pendant les phases de freinage ou d'accélération. Or il a été trouvé, qu'en adaptant de tels éléments de transmission, il était possible d'obtenir un nouveau type de différential qui se présente sous la forme d'un ensemble irréversible permettant, comme dit précédemment, non seulement d'obtenir une vitesse de rotation différente entre les roues si cela est nécessaire, mais également de transmettre le couple moteur en permanence à chacune des roues, et ce quelle que soit leur adhérence par rapport au sol.

D'une manière générale, l'invention concerne un nouveau typ de différentiel permettant de transmettre la puissance et le couple d'un moteur à deux demi-arbres commandant chacun l'entraînement des roues d'un véhicule, ce différentiel comprenant :
- un boitier fixe monté entre les extrémités des deux arbres et à la périphérie duquel est prévue une couronne commandée par un pignon d'attaque relié à l'arbre du moteur ;
- deux ensembles dits "plantétaires" commandant respectivement chacun des demi-arbres entraînant les roues ;
- des satellites montés libres en rotation sur des arbres solidaires du boitier qui sont en prise avec les deux ensembles planétaires.

Selon l'invention, on utilise pour réaliser les éléments formant les planétaires et satellites, des systèmes se présentant sous la forme d'une spirale creuse en prise avec un élément en forme de roues.

Selon l'invention :
- les ensembles dits "planétaires" sont constitués de deux spirales disposées face à face l'intérieur du boitier et dont les pas sont inversés ;
- les satellites sont constitués de roues montées sur les axes liés au boitier et qui comportent en surface des parties en relief ou dents dont le profil est le complément du profil des spirales creuses à l'intérieur desquelles elles sont en prise, les axes géométriques desdites roues s'étendant dans le plan médian entre les deux faces des deux spirales.

Avantageusement, en pratique, conformément à l'invention :
- les parties en relief ou dents des roues formant les satellites peuvent avoir un profil en forme de portion de sphère (auquel cas, dans la suite de la description, ces roues seront désignées par l'expression "roues à billes") ; avantageusement, selon une forme de réalisation de l'invention, les spirales formant les planétaires ont un profil de crémaillère, les parties en relief ou dents des roues formant les planétaires ayant alors un profil complémentaire ;
- les entre-axes des roues satellites sont calculés de telle sorte que l'on retrouve une symétrie des parties en relief par rapport au plan médian du mécanisme, de telle sorte que lesdites parties en relief s'engrènent parfaitement à l'intérieur desdites spirales :

- les satellites comportent un nombre de dents pair, ce nombre étant compris entre six et douze ;
- le pas des spirales est égale au pas calculé entre les centres de deux parties en relief.

L'invention et les avantages qu'ell apporte seront cependant mieux compris grâce aux exemples de réalisation donnés ci-après à titre indicatif mais non limitatif et qui sont illustrés par le schémas annexés dans lesquels :

- la figure 1 est une vue en coupe suivant l'axe AA d'un dispositif différentiel conforme à l'invention ;

- la figure 2 est une vue en coupe suivant l'axe BB d'un tel dispositif ;

- la figure 3 illustre schématiquement, en perspective éclatée, les spirales et roues planétaires que comporte un dispositif conforme à l'invention et dans lesquelles les parties en relief ont un profil en forme de "billes" ;

- les figures 4,5,6 et 7 sont des schémas illustrant le fonctionnement d'un tel dispositif, à savoir :

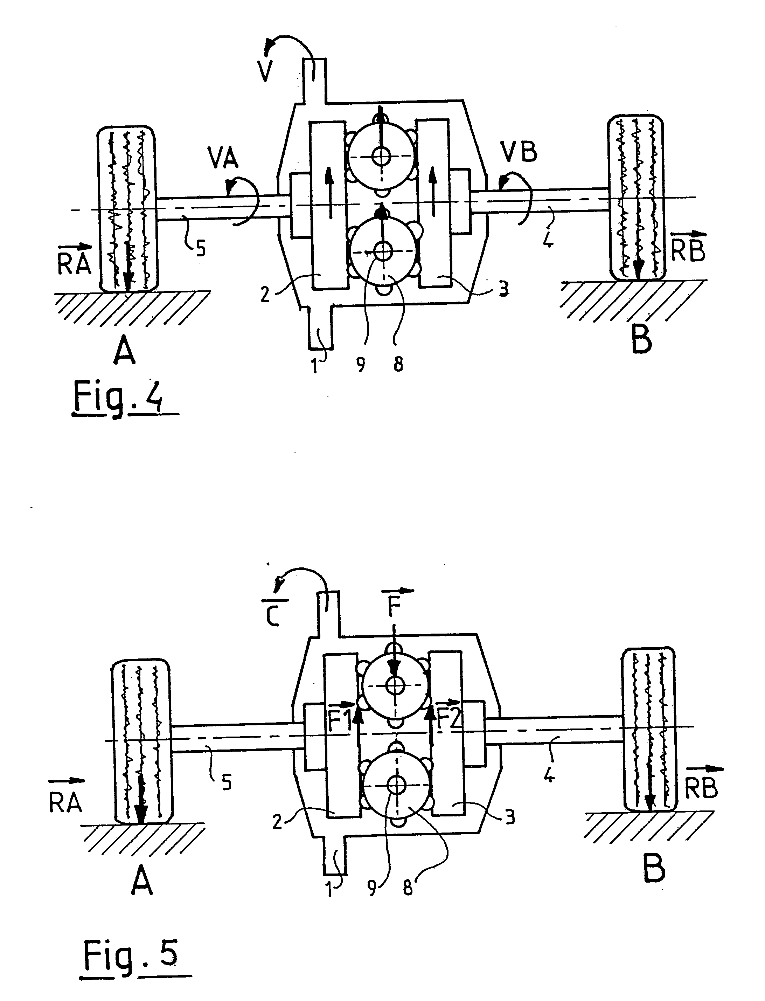

. figures 4 : la cinématique du système lorsque les roues A et B ont la même adhérence,

. figure 5 : les différentes forces qui agissent sur le système lorsque les roues A et B ont la même adhérence,

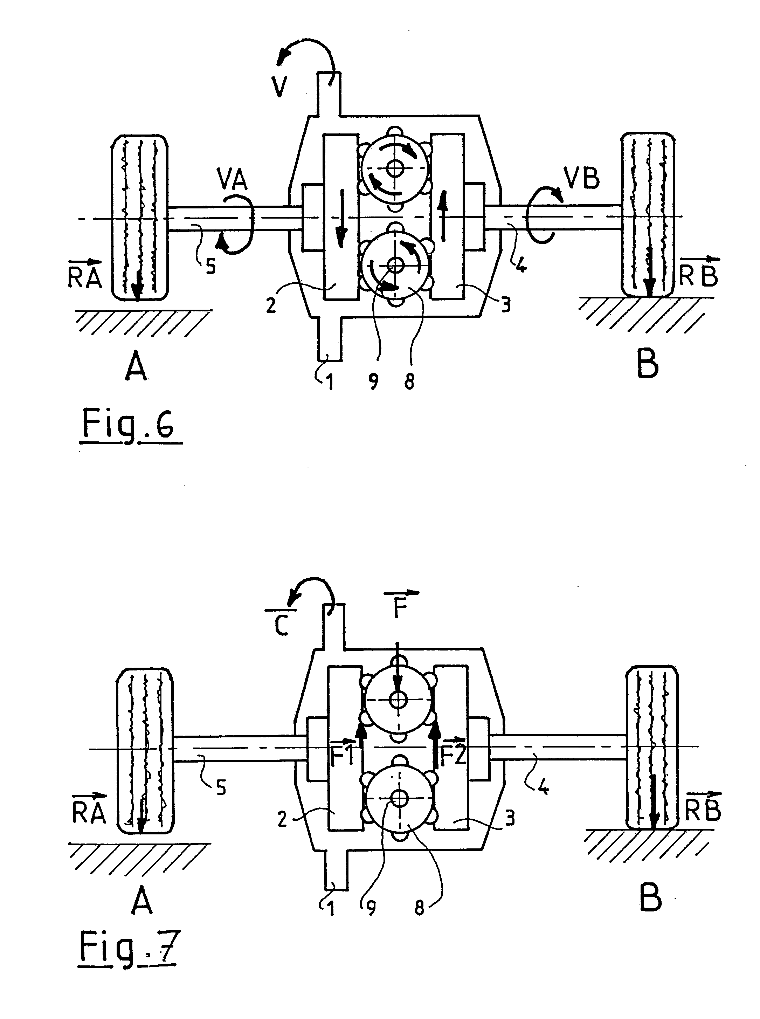

. figure 6 : la cinématique du système lorsque la roue A perd de l'adhérence par rapport à la roue B,

. figure 7 : les différentes forces qui agissent sur le système lorsque la roue A perd de l'adhérence par rapport à la roue B.

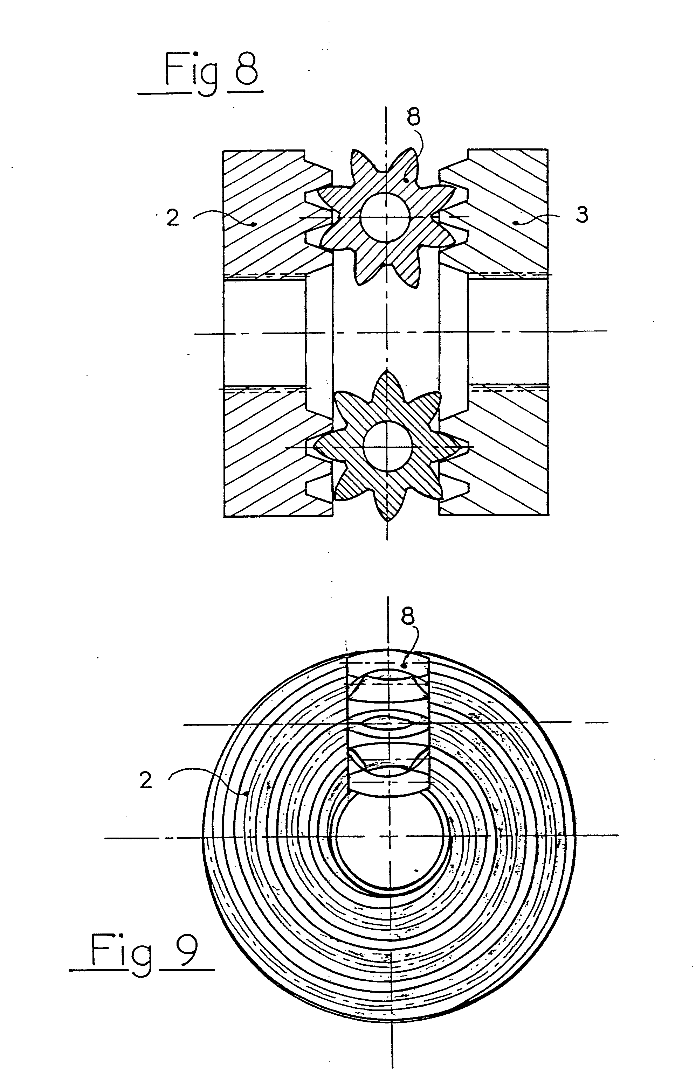

- les figures 8 et 9 illustrent une autre forme de réalisation d'un differentiel conforme à l'invention dans lequel les spirales ont un profil de crémaillère et les roues satellites ont un profil complémentaire auxdites spirales.

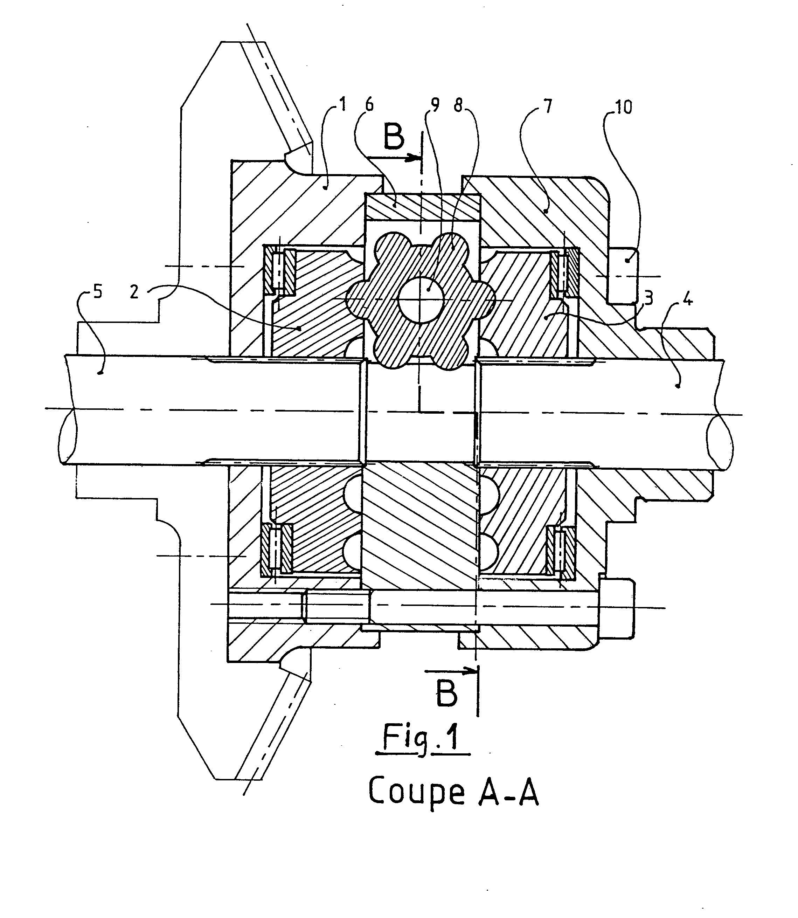

Dans la suite de la description, l'invention sera décrite plus particulièrement pour le mode de réalisation illustré par les figures 1 à 7, et par mesure de simplification, le terme "billes" sera utilisé pour désigner la forme des parties en relief ou dents des roues formant les satellites. Il est entendu que ce terme "billes" n'est pas utilisé pour indiquer que des éléments en forme de billes sont rapportés à la périphérie des ensembles formant les satellites, mais dans le sens où lesdits ensembles formant les satellites présentent en surface des parties en relief réalisées dans la masse.

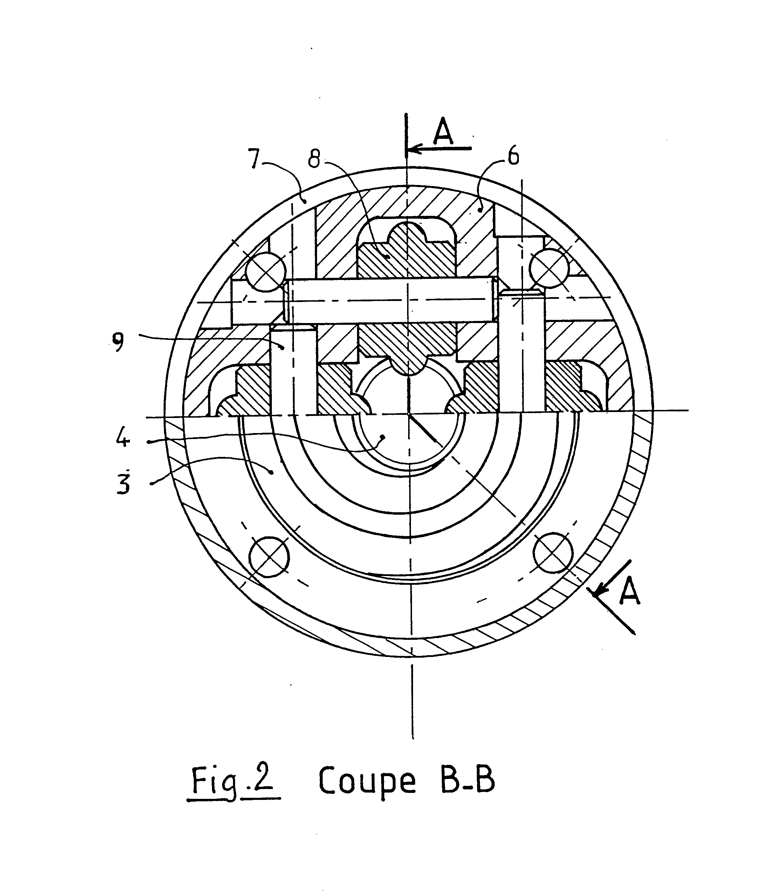

Si l'on se reporte aux schémas annexés et plus particulièrement aux figures 1 et 2, le différentiel conforme à l'invention se compose essentiellement d'un boitier (1) monté entre les extrémités des deux demi-arbres (4,5) commandant l'entraînement des roues A et B du véhicule. A la périphérie du boitier (1), est prévue une couronne commandée par un pignon d'attaque relié à l'arbre moteur et ce, de manière conventionnelle. Afin de pouvoir assurer le maintien et le positionnement des ensembles planétaires et satellites conformes à l'invention, le boitier (1) est associé à une flasque (7) de telle sorte que l'on puisse fixer, entre ces deux éléments le support (6) des roues à "billes" remplissant la fonction de satellites. Quatre boulons (10) permettent le maintien de l'ensemble. Aux extrémités de chacun des demi-arbres (4,5) , sont montées deux spirales identiques au pas inversé (2,3) , disposées en regard l'une de l'autre et fixées aux extrémités des demi-arbres de roues (5) et (4) . A ces spirales, sont associées quatre roues à "billes" (8) qui s'engrènent réciproquement dans les spirales (2) et (3) . Les roues à "billes" (8) sont libres en rotation autour de leur axe (9) lié à l'entretoise (6) leur servant de support et qui est enserré entre le boitier (1) et la flasque (7) .

Grâce à un tel dispositif, lorsque le demi-arbre de roues (5) et (4) ne tournent pas à la même vitesse, c'est-à-dire l'un en sens inverse de l'autre par rapport à la rotation du boitier (1) , les spirales (2) et (3) donnent un mouvement de rotation aux roues à "billes" (4) car le pas de la spirale (2) est opposé au pas de la spirale (3) . L'effet différentiel peut donc se faire. Le boitier (1) transmet toujours le couple moteur aux roues à "billes" (8) par l'intermédiaire de l'entretoise (6) et les spirales (2) et (3) sont entraînées en rotation à la même vitesse que (1) si les efforts sur (4) et (5) sont égaux ; à des vitesses différentes, si les efforts sur (4) et (5) sont différents rompant ainsi l'équilibre des forces à gauche et à droite sur les roues à "billes" (8) .

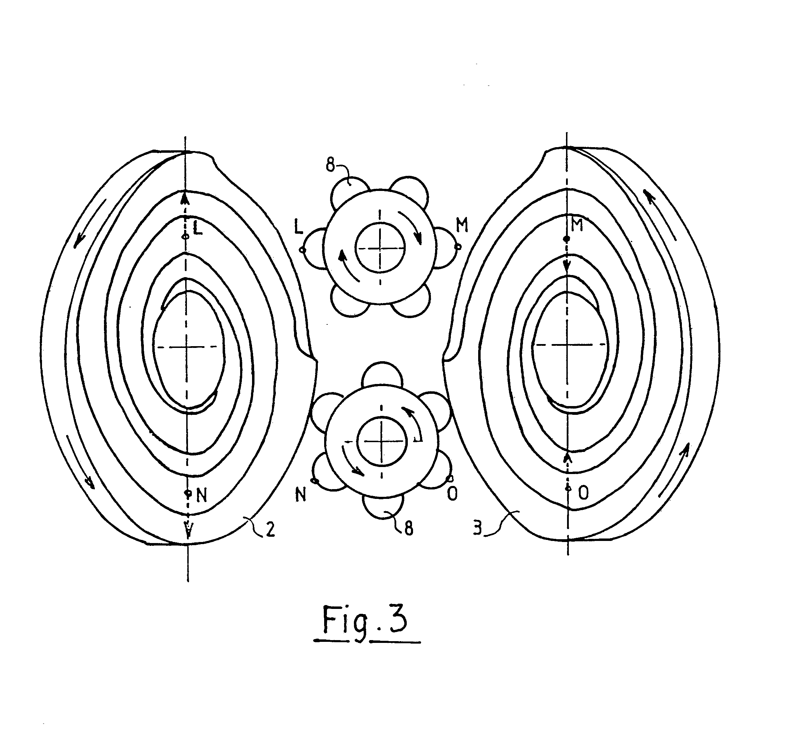

La figure 3 illustre la manière dont coopèrant les spirales et roues à "billes" conformes à l'invention, cette figure 3 permettant de voir les déplacements des points de contact du système d'engrenage à spirales et roues à "billes" lorsque les deux roues du véhicule tournent à des vitesses différentes. Les flèches en traits continus indiquent les sens de rotation des différents éléments. Les flèches en traits pointillés indiquent les sens de déplacement des points de contact (L.M.N.O.) des roues à "billes" (8) dans les spirales (2) et (3) . Le pas des spirales (2) et (3) est égal au pas calculé entre les centres de deux "billes" des roues à "billes" (8) .

Dans un tel dispositif, comme matériaux utilisés pour réaliser les différents éléments on utilisera, par exemple, pour le boitier (1) et le flasque (7) de la fonte usinée de manière conventionnelle. Le support de roues à "billes" (6) et les axes (9) seront en acier, les roues à "billes(8) et les spirales (2) et (3) étant, quant à elles, de préférence en acier spécial trempé.

Les figures 4 à 7 illustrent, de manière schématique, le fonctionnement d'un tel ensemble.

Sur la figure 4, on peut voir que si la roue A a la même adhérance que la roue B : $\vec{RA} = \vec{RB}$ . La vitesse V se transmet du boitier (1) aux spirales (2) et (3) par l'intermédiaire des roues à billes" (8), dans ce cas les roues à "billes" sont fixes par rapport à leur axe (9) et entraînent les spirales à la même vitesse VA = VB et dans le même sens. Les roues A et B du véhicule tournent à la même vitesse. Les flèches de la figure 1 indiquent les sens de rotation des différents éléments.

Sur la figure 5, on peut voir que si $\vec{RA} = \vec{RB}$ le couple $\vec{C}$ engendre une force $\vec{F}$ sur les roues à "billes" (8) . $\vec{F1}$ et $\vec{F2}$ sont les réactions à cette force des spirales (2) et (3) sur les roues à "billes"

(8) . $\overrightarrow{F1}$ et $\overrightarrow{F2}$ sont égales et opposées. Les roues (8) se trouvent en équilibre sur leur axe (9) et transmettent le couple $\overrightarrow{c}$ aux spirales (2) et (3) qui entraînent les roues A et B par l'intermédiaire des demi-arbres de roues (5) et (4) .

Sur la figure 6, on peut voir que si la roue A perd de l'adhérence au sol par rapport à la roue B : les roues à "billes" (8) ne reçoivent plus les mêmes sollicitations à gauche et à droite, et se mettent à tourner sur leurs axes (9) . La roue A tourne en sens inverse de la roue B rapport au sens de rotation du boitier (1) animé d'une vitesse V. VA diminue par rapport à VB. La roue A n'aura pas tendance à s'emballer ni à patiner.

Sur la figure 7, on peut voir que si la roue A perd de l'adhérence au sol par rapport à la roue B, la réaction de la spirale (2) sur les roues à "billes" (8) va engendrer une force $\overrightarrow{F1}$ qui être inférieure à $\overrightarrow{F2}$ force de réaction de la spirale (3) sur la même roue à "billes" (8) que se met à tourner sur son axe (9). Les "billes" des roues (8) s'engrènent dans les gorges des spirales (2) et (3) et vont tourner autour de celles-ci sans les entraîner théoriquement. Il y a donc un glissement du boitier (1) autour des demi-arbres de roues (4) et (5) . Les spirales recevront toujours un peu de couple car $\overrightarrow{RA}$ n'est jamais égale à zéro, il y aura donc toujours un certain couple transmis aux roues A et B.

Il en va réciproquement lorsque $\overrightarrow{RA}$ est supérieure à $\overrightarrow{RB}$ .

Un tel type de différentiel permet, donc comme dit précédemment, de transmettre en permanence un couple moteur à chacune des roues et ce, quelque soit leur adhérence par rapport au sol tout en autorisant une vitesse de rotation différente d'une roue par rapport à l'autre si cela est nécessaire. On évite donc de cette manière tout patinage, risque d'usure des pièces. Par ailleurs, ce différentiel ne comporte pas plus de pièces mécaniques qu'un différentiel traditionnel, ce qui rend sa fabrication peu coûteuse.

Un tel type de différentiel peut être utilisé sur tout type de véhicle, ce terme étant pris dans un sens large et désignant aussi bien des automobiles que des engins agricoles, de travaux publics.. Il peut être utilisé aussi bien sur des véhicules à quatre roues, dont deux seulement sont motrices qu'à des véhicules à deux roues tels que par exemple sur les motoculteurs qui, actuellement, sont difficiles à manoeuvrer. Enfin, il peut également être utilisé comme différentiel intermédiaire dans un véhicule 4 x 4 pour relier le pont avant au pont arrière.

Bien entendu, l'invention n'est pas limitée à l'exemple de réalisation décrit précédemment, mais elle en couvre toutes les variantes réalisées dans le même esprit. Ainsi, par exemple, on pourrait réaliser une variante au dispositif conforme à l'invention permettant d'obtenir un meilleur rendement sur les système ainsi que de diminuer les pressions sur les roues à "billes" en modifiant les profils des spirales qui pourraient avoir un profil de crémaillère, les roues à billes ayant un profil complémentaire. Une telle variante est illustrée par les figures 8 et 9, la figure 8 montrant plus particulièrement le profil des spirales (2,3) et des roues à "billes" (8) en coupe, les spirales (2,3) ayant un profil de crémaillère et les roues (8) un profil complémentaire auxdites spirales (2,3) . La figure 9 montre cette variante du profil sur la spirale (2) en vue de face et une des roues à "billes" en prise avec ladite spirale.

## Revendications

1/ Dispositif permettant de transmettre la puissance et le couple d'un moteur à deux demi-arbres (4,5) commandant chacun l'entraînement des roues d'un véhicule comprenant :
- un boitier fixe (1) monté entre les extrémités des deux arbres et à la périphérie duquel est prévue une couronne commandée par un pignon d'attaque relié à l'arbre du moteur ;
- deux ensembles dit "planétaires" commandant respectivement chacun des demi-arbres (4,5) entraînant les roues (8) ;
- des satellites, montés libres en rotation sur des arbres solidaires du boitier (1) et qui sont en prise avec les deux ensembles planétaires, et il se caractérise en ce que :
- les ensembles dit "planétaires" sont constitués de deux spirales (2,3) disposées face à face à l'intérieur du boitier (1) et dont les pas sont inversés ;
- les satellites sont constitués de roues (8) montées sur des axes (9) liés au boitier (1) et qui comportent en surface des prties en relief ou dents, dont le profil est le complément du profil des spirales creuses (2,3), à l'intérieur desquelles elles sont en prise, les axes géométriques desdites roues à s'étendant dans le plan médian entre les deux faces deux spirales (2,-3) .

2/ Dispositif selon la revendication 1, caractérisé en ce que les parties en relief ou dents des roues (8) formant les satellites ont un profil en forme de portion de sphère.

3/ Dispositif selon la revendication 1, caractérisé en ce que les spirales ont un profil en forme de crémaillère, les parties en relief ou dents des roues (8) formant les planétaires ayant un profil complémentaire.

4/ Dispositif selon l'une des revendications 1 et 3, caractérisé en ce que les entraxes des roues satellites sont calculés de telle sorte que l'on retrouve une symétrie des parties en relief (8) par rapport au plan médian du mécanisme, de telle sorte que lesdites parties en relief (8) s'engrènent parfaitement à l'intérieur des spirales (2,3) .

5/ Dispositif selon l'une des revendications 1 à 4, caractérisé en ce que le nombre de dents ou parties en relief des satellites est pair et est compris entre six et douze.

6) Dispositif selon l'une des revendications 1 à 5, caractérisé en ce que le pas des spirales (2,3) est égal au pas calculé entre les centres de deux parties en relief des roues satellites (8) .

Fig.1

Coupe A-A

Fig.2   Coupe B-B

Fig.3

V

VA                                    VB

RA                                              RB

5                                    4

2                  3

1    9    8

A                                              B

<u>Fig.4</u>

C                      F

F1        F2

RA                                              RB

5                                    4

2                  3

1    9    8

A                                              B

<u>Fig.5</u>

EP 0 332 542 A1

Fig.6

Fig.7

Fig 8

8

2

3

Fig 9

8

2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-1 213 258  (C.E. REDDIG) <br> * document en entier * | 1,3,4 | F 16 H    1/38 <br> F 16 H  55/10 |
| Y |  | 2 | |
| D,Y | US-A-3 608 392  (J.J. GILBERT) <br> * figures 1,2 * | 2 | |
| D,A | DE - A - 13560 II W. ARNOLD <br> * le document en entier * | 1,3,4 | |
| A | US-A-1 352 910  (D.D. ORMSBY) <br> * document en entier * | 1,3,4 | |

**DOMAINES TECHNIQUES RECHERCHES (Int. Cl.4)**

F 16 H
B 60 K

Le présent rapport a été établi pour toutes les revendications

| Lieu de la recherche | Date d'achèvement de la recherche | Examinateur |
|---|---|---|
| BERLIN | 28-04-1989 | GERTIG I. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................................
& : membre de la même famille, document correspondant

EPO FORM 1503 03.82 (P0402)